# EUROPEAN PATENT SPECIFICATION

(11) **EP 1 753 704 B1**
(45) Date of publication and mention of the grant of the patent: **02.12.2009**
(21) Application number: 05750274.2
(22) Date of filing: 08.06.2005
(51) Int. Cl.: C04B 14/22, C03C 14/00

(54) **BUILDING PRODUCT MATERIAL AND METHOD FOR MAKING IT**
BAUPRODUKTMATERIAL UND HERSTELLUNGSVERFAHREN DAFÜR
MATERIAU DE CONSTRUCTION ETSON PROCEDE DE FABRICATION

(30) Priority: 10.06.2004 GB 0412958
(43) Date of publication of application: 21.02.2007
(73) Proprietor: Geofusion Group Limited, Worcester Worcestershire WR5 2ZX (GB)
(72) Inventor: READ, David, Beaconside, Stafford ST18 0AD (GB); ANDERSON, Michael, Beaconside, Stafford ST18 0AD (GB); DOWLER, David, Beaconside, Stafford ST18 0AD (GB)
(74) Representative: Harris, David James
(86) International application number: PCT/GB2005/002274
(87) International publication number: WO 2005/121041

(56) References cited:
- WO-A-00/44685
- WO-A-2004/050578
- DE-A1- 4 433 795
- FR-A- 2 774 088
- FR-A- 2 774 089
- US-B1- 6 296 699

## Description

This invention concerns a method of converting hazardous recycled glass into safe building products, by a method of making a building product material from such glasses, such a material, a method of making an article from such a building product material, and such an article. In particular, the invention relates to the conversion of Cathode Ray Tube (CRT) glasses.

A significant amount of waste glasses from discarded cathode ray tubes are available for recycling, but appropriate uses for this are not readily identifiable, particularly due to their hazardous nature related to high Lead, Barium and Strontium content of such glasses, and concerns regarding such metals entering the environment in solution as a leachate sourced from the CRT glasses.

There are two CRT glass types contained in a cathode ray tube, these are the CRT funnel (or cone) which contains Lead, and the CRT panel which contains Barium and Strontium.

Significant amounts of other types of waste glass are available and are currently being recycled.

The patent applications published as DE 4 433 795, FR 2 774 089 and FR 2 774 088 all disclose the use of recycled Cathode Ray Tube glass in building products.

All percentages given in this specification are by weight.

According to the present invention there is provided a method of converting recycled Cathode Ray Tube glasses into a building product, by a method of making a building product material, the method including the steps of:
forming a compact of a product material, the product material including particulate recycled CRT glasses, fine particulate recycled container glass and an inorganic binder; and firing the compact; wherein the product material includes greater than 70% by weight of CRT glasses in the encapsulated type building product.

Specific proportions, size ranges and glass types are used, to enable mechanisms which encapsulate and/or dilute the CRT glasses in the building product. This significantly reduces the metal leaching potential of the CRT glasses.

The major mechanism contributing to the reduction in leachate potential in the encapsulation technique involves the coating and permanently bonding of fine container glass particles to the surface of relatively larger CRT glass grains. This significantly reduces the exposed reaction surface of the CRT grains. There is also a minor mechanism of dilution involved, reducing the leachate potential in proportion to the reduction of the proportion of coarse CRT glass present by substitution with fine container glass.

There are two dilution types, characterised by the particle size ranges involved, but the major and minor mechanisms contributing to the reduction in leachate potential in both types is identical. The major mechanism contributing to the reduction in leachate potential in the dilution technique is the reduction in the proportion of CRT glass present by substitution with container glass. The minor mechanism contributing to the reduction in leachate potential is some encapsulation activity, as described in the previous paragraph.

The present invention covers a method of manufacturing a building product utilising both the encapsulation technique and the dilution technique.

The product material preferably includes greater than 97% recycled glasses.

The cathode ray tube may be physically separated into two glass components: panel glass (containing Barium and Strontium) and funnel glass (containing Lead).

CRT panel glass alone or a mixture of CRT panel and funnel glass may be used as a product material component.

The recycled glass may be colour sorted.

The hazardous recycled glass may be obtained from glasses used in cathode ray tubes, from such as computer monitors or televisions; the non-hazardous recycled glass may be obtained from container glass, such as bottles or jars.

The product material may comprise a mixture of one or more different types of recycled glass.

The recycled glass in the product material may have a particle size of less than 2000µm.

For the encapsulated technique, the CRT glass may be processed such that the particle size ranges between 100µm to 2000µm. For an embodiment of the diluted technique, the CRT glass may be processed such that particle size is less than 300µm.

For an alternative embodiment of the diluted technique, the CRT glass may be processed such that the particle size is less than 100µm.

The container glass component may have a particle size range of less than 75µm for the encapsulated technique or less than 2000µm for the diluted techniques.

The recycled glass may be crushed prior to formation of the compact. The recycled glass may be primary milled following crushing. The recycled glass may be secondary milled following primary milling.

The oversize particles are removed from the crushed and milled bulk glasses using vibratory screening. The less than 100µm CRT glass particles and less than 75µm container glass particles may be removed from their respective crushed and milled bulks by air classification techniques.

Contaminants are preferably removed during and/or after crushing and/or milling.

The recycled glass may be coloured, and may be coloured by the addition of a colouring material which may be in the form of metallic oxides, pigments, or stains.

The colouring material is preferably mixed with the glass components after the mixing with the binder.

For the encapsulated technique, the 2000 to 100µm CRT glass component is preferably firstly mixed with the inorganic binder, after which the less than 75µm container glass component is preferably added and mixed.

For an embodiment of the diluted technique, the less than 2000µm CRT glass component is preferably blended with the less than 2000µm container glass component, then is preferably mixed with inorganic binder.

For an alternative embodiment of the diluted technique, the less than 2000µm container glass component is preferably mixed with the inorganic binder, afterwards the less than 100µm CRT glass component is preferably added and mixed.

The inorganic binder may be cured during or following formation of the compact but prior to firing.

The inorganic binder may comprise sodium silicate, desirably in liquid form. Preferably less than 3.5% inorganic binder is included, and desirably less than 2%. The sodium silicate may be cured by carbon dioxide gas. The carbon dioxide gas is desirably introduced at a pressure of between 1 and 4 Bar, and for a time period of between one and ten seconds. The pressing pressure is preferably in the range 15 to 62 Mpa.

The compact may be formed by pressing, vibropressing or ramming the product material in a mould space. The inorganic binder is preferably cured following pressing, vibropressing or ramming of the compact, but whilst the compact is still in the mould space. A perforated punch, other permeable item, or inlet into the mould space, may be provided through which carbon dioxide is passed to enter the compact.

One or more surfaces of the compact may be profiled. This may be achieved by using any of a profiled punch, a profiled mould, or a profiled former provided in the mould space. Alternatively or in addition, a surface of the compact can be treated prior to firing, and desirably by any of brushing, compressed air or glass blasting.

A different product material may be provided just near a surface of the compact, and this can be achieved by initially filling the mould space with the different material, or finally filling the mould space with the different material.

A surface of the compact may be decorated and this can be achieved by spraying, atomisation, brushing, and/or printing and in particular screen printing.

The compact can be finished following firing, and by any of edge grinding, surface grinding, surface polishing and/or cutting.

Material rejected during formation is preferably recycled in the method.

Firing preferably takes place at a peak temperature of between 600 and 725°C, with a peak temperature dwell of between five and sixty minutes.

The invention also provides a building product material made by a method according to any of the preceding paragraphs.

The invention further provides a method of making an article, the method comprising using a method according to any of said preceding paragraphs, with a mould space of a required shape to form the article.

The invention further provides an article made by such a method.

The article may comprise a building product, including any of interior/exterior bricks, pavers, blocks, cladding or garden ware.

Embodiments of the present invention will now be described by way of example only, and with reference to the figures of the accompanying drawings in which:
- Fig. 1: is a cross-sectional view of a press; and
- Fig. 2: is a cross-sectional view of a vibropress.

Two general examples relating to the formation of a compact by pressing and vibropressing will now be briefly described followed by specific examples.

### General example of pressing.

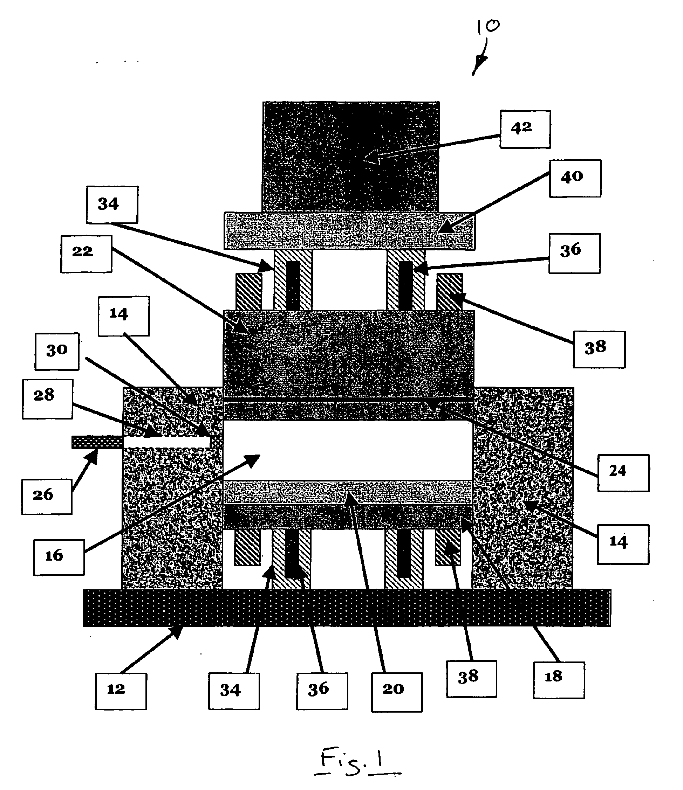

A compact is formed by pressing a product material formed largely of particulate recycled glass. The compact is formed in the apparatus 10 shown in Fig. 1 of the accompanying drawing. The apparatus 10 includes a press table 12 which mounts a mould box 14 which defines a pressing space 16. A lower punch 18 is provided in the bottom of the space 16.

In use, product material 20 to be pressed is located in the space 16 above the lower punch 18. An upper punch 22 is located in the space 16 on the top of the material 20, and pressing takes place.

Following pressing, the upper punch 22 is raised to the position shown in the drawing and an inflating seal 24 which extends around the perimeter of the upper punch 22 and in this position remains in the space 16, is inflated. An accelerant which in this instance is carbon dioxide to cure the inorganic binder in the product material 20, is introduced from a supply 26 through a channel 28 into the mould space 16. A sealing valve 30 is provided over the opening of the channel 28 leading into the space 16, to prevent product material entering the channel 28.

After a required exposure time to the accelerant gas, injection of the gas is stopped and the seal 24 is deflated. The upper punch 22 is then fully withdrawn from the mould box and the hardened product is ejected from the mould box by the lower punch 18. The inflating seal 24 around the upper punch 22 ensures that the accelerant gas is retained in the mould space 16.

The product material is pressed to a specific pressure depending on the material recipe and type. The material includes a binder which in all of the following examples is sodium silicate in liquid form. The binder is cured by exposing the pressed material to carbon dioxide at specified pressures and time duration, prior to removal from the mould space. The pressure and duration of exposure to carbon dioxide gas depends on the thickness of the material arid the material permeability.

The green compact following removal from the mould space 16 is subsequently fired at required parameters for the material. Any reject compacts at any point are returned for recycling in the process.

### General example of Vibropressing.

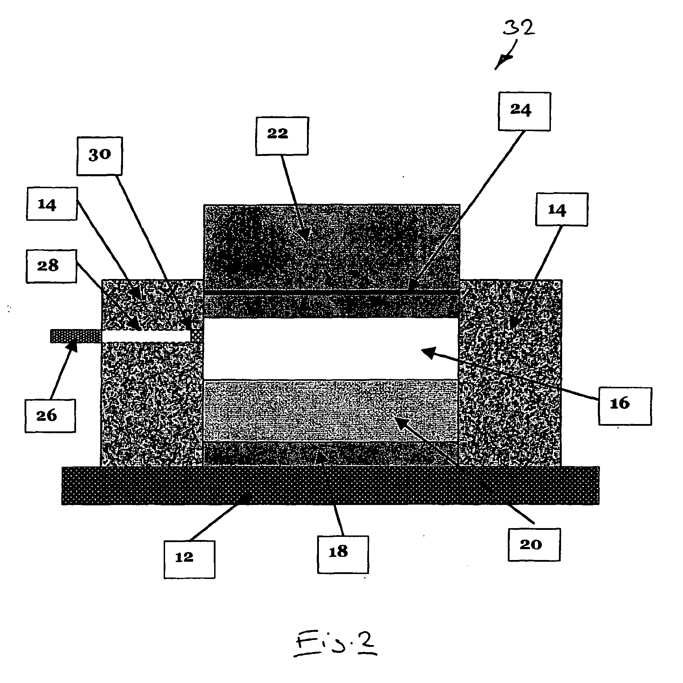

A compact is formed by vibropressing a product material formed largely of particulate recycled glass, in a similar manner to that described for pressing. However, in addition to the example of pressing, extra components are included in the apparatus to facilitate vibration of upper punch, lower punch and so the product material. The inclusion of vibration during pressing facilitates compaction to the required bulk density at lower applied pressure. The compact is formed in the apparatus, generally designated 32, shown in Fig. 2 of the accompanying drawings. The apparatus 32 includes a press table 12 to which is mounted a mould box 14 which defines a pressing space 16. A lower punch 18 is provided in the bottom of the space 16. The lower punch 18 is supported above the press table 12 lower isolating tubes 34. Lower load transfer pillars 36 are located internally within the isolating tubes 34. Vibrating motors 38 are positioned on the underside of the lower punch 18. An upper punch 22 is supported below an adaptor plate 40, by isolating tubes 34, within which are located upper load transfer pillars 36. Vibrating motors 38 are positioned on the topside of the upper punch 22.

In use, product material 20 to be pressed is located in the space 16 above the lower punch 18. The upper punch 22 is located in the space 16 on the top of the material 20, and the vibrating motors 38 are energised. The isolating tubes 34 ensure the vibration is restricted to the required area i.e. within the pressing space 16 and between the upper and lower punches 18, 22. A ram 42 provided above the adapter plate 40 is slowly extended and begins to compact the product material, while the vibration encourages more efficient grain and particle packing. When the load transfer pillars 36 make solid contact and accept load, the vibrating motors 38 are de-energised. Full load pressing then takes place.

Following pressing, the upper punch 22 is raised to the position shown in the drawing and an inflatable seal 24 which extends around the perimeter of the upper punch 22 and which in the position shown, remains in the space 16, is inflated. A binder curing accelerant, for example carbon dioxide, is introduced from a supply 26 through a channel 28 into the mould space 16. A sealing valve 30 is provided over the opening of the channel 28 leading into the space 16, to prevent product material entering the channel 28.

After a required exposure time to the accelerant gas, injection of the gas is stopped and the seal 24 is deflated. The upper punch 22 is then fully withdrawn from the mould box and the hardened product is ejected from the mould box by the lower punch 18. The inflating seal 24 around the upper punch 22 ensures that the accelerant gas is retained in the mould space 16.

The product material is pressed to a specific pressure depending on the material recipe and type. The material includes a binder which in all of the following examples is sodium silicate in liquid form. The binder is cured by exposing the pressed material to carbon dioxide at specified pressures and time duration, prior to removal from the mould space. The pressure and duration of exposure to carbon dioxide gas depends on the thickness of the material and the material permeability.

Following removal from the mould space 16, the green compact is subsequently fired at required parameters for the material. Any reject compacts at any point are returned for recycling in the process.

The product material for pressing in either of the manners described above is initially prepared as follows. The glass is coarsely crushed. Contaminants may be removed after the coarse crushing operation. The glass is then primary milled and contaminants again may be removed. The glass is then secondary milled and then passed through a series of vibrating screens to provide fractions of required sizes. Oversize glass is returned to secondary milling. When required, the milled and screened CRT glass is passed through an air classifier to separate the less than 100µm fraction from the bulk.

### Example One

The following example relates to the aforementioned encapsulated technique where fine container glass particles are bonded to the surface of relatively larger CRT glass openings.

90% cathode ray tube panel glass with a particle size range of less than 2000µm and greater than 100µm mixed with +2% liquid sodium silicate; then 10% mixed colour container glass with a particle size range of less than 75µm was mixed in to the batch. The product material was pressed at a pressure of 30.9MPa in the press apparatus 10 described with reference to Fig. 1 to a thickness of 65mm. Carbon dioxide gas was fed into the space 16 following pressing at 2 Bar pressure for 5 seconds.

The hardened compact was ejected from the space 16 and fired at a rate of 30°C per minute to an interim temperature of 620°C for a dwell of 60 minutes, then fired at a rate of 30°C per minute to a peak temperature of 640°C for a dwell of 60 minutes, and a subsequent average cooling rate of 2°C per minute.

This produced a material with the appearance of a specked grey/green brick which had water absorption of 9% and a compressive strength of 65 N/mm². A sample of the product was crushed to less than 2mm and subjected to a severe exposure regime of the following: hot concentrated nitric acid, hot 30% solution hydrogen peroxide and hot concentrated hydrochloric acid. The leachate was analysed using Inductively Coupled Plasma.

Analysis of the leachate yielded the following results:
Strontium less than 0.38 ppm; Barium less than 0.47 ppm.

### Example Two

The following example relates to the dilution technique where the reduction in leachate potential is realised by substitution of CRT glass with container glass.

85% colour blended container glass with a particle size range of less than 2000µm was mixed with +2% liquid sodium silicate; then 15% cathode ray tube panel glass with a particle size range of less than 100µm was mixed in to the batch; the mixture was then pressed at a pressure of 45MPa in the apparatus 10 described with referenced to Fig. 1 to a thickness of 50mm and carbon dioxide gas was fed into the space 16 under similar conditions as for example one.

The hardened compact was ejected from the space 16 and fired at a rate of 30°C per minute to an interim temperature of 650°C for a dwell of 60 minutes, then fired at a rate of 30°C per minute to a peak temperature of 670°C for a dwell of 60 minutes, and a subsequent average cooling rate of 3°C per minute.

This produced a material with the appearance of a green paver which had water absorption of 10% and a transverse strength of 9.5 Mpa.

### Example Three

### A further example of the dilution technique

50% cathode ray tube panel glass with a particle size range of less than 2000µm, was blended with 50% brown colour sorted container glass, and then mixed with +2% liquid sodium silicate. The product material was pressed at a pressure of 45MPa in the apparatus 10 described with reference to Fig. 1 to a thickness of 65mm. Carbon dioxide gas was fed into the space 16 following pressing at 2 Bar pressure for 5 seconds.

The hardened compact was ejected from the space 16 and fired at a rate of 30°C per minute to an interim temperature of 640°C for a dwell of 60 minutes, then fired at a rate of 30°C per minute to a peak temperature of 650°C for a dwell of 60 minutes, and a subsequent average cooling rate of 3°C per minute.

This produced a material with the appearance of a specked yellowish brown paver which had water absorption of 11% and a transverse strength of 8.7 Mpa.

Analysis of the leachate (test method as described in example One) yielded the following results:
Strontium less than 0.85 ppm; Barium less than 0.91 ppm.

### Example Four

### A further example of the encapsulation technique

80% cathode ray tube panel glass with a particle size range of less than 2000µm and greater than 100µm was mixed with +2% liquid sodium silicate; then 20% brown colour sorted container glass with a particle size range of less than 75µm was mixed in to the batch. The product material was vibropressed at a pressure of 15.4MPa in the apparatus 32 described with reference to Fig. 2 to a thickness of 25mm. Carbon dioxide gas was fed into the space 16 following pressing at 2 Bar pressure for 5 seconds.

The hardened compact was ejected from the space 16 and fired at a rate of 30°C per minute to an interim temperature of 630°C for a dwell of 15 minutes, then fired at a rate of 30°C per minute to a peak temperature of 650°C for a dwell of 30 minutes, and a subsequent average cooling rate of 4°C per minute.

This produced a material with the appearance of a specked brown 300mm cladding tile which had water absorption of 8.2% and a transverse strength of 15.1 MPa. The material obtained was surface ground to reveal a fine yellow and off-white texture.

There are thus described methods, and materials produced by such methods, providing a wide range of uses for recycled CRT glasses and container glass.

This process provides a novel method for converting hazardous recycled CRT glasses into safe commercial building products.

The process is intentionally designed to convert hazardous CRT glasses into a form facilitating a safe and useful function in the built environment.

The process intentionally uses solely glass(es) as the principal product structural material to:
i) reduce the amount of binder required, because the glass is non-absorbent;
ii) permit firing the product at a low temperature, because glasses begin to soften at relatively low temperature;
iii) permit rapid heating of the product during firing, because the glass does not exhibit endothermic reactions during heating (which introduce thermal barriers to heat transfer);
iv) reduce the energy required to raise the temperature of the product during firing, because glasses possess relatively low specific heat capacity and no endothermic reactions;

The CRT glass raw material is intentionally milled to a relatively coarse size to:
i) reduce the exposed reaction surface area;
ii) increase the size differential between the CRT grains and the container glass it is subsequently mixed with;
iii) reduce milling energy consumption;
iv) reduce wear on components of the milling equipment;
v) reduce the binder component requirement, by minimizing the surface area of the milled glass;
vi) produce the required texture and pore size, promoting durability in the final product.

The products are intentionally compacted and then gassed under pressure whilst still in the press, to:
i) reduce the magnitude of shrinkage during firing, though elimination of porosity during pressing;
ii) reduce the maturing temperature and increase final strength, through elimination of porosity during pressing;
iii) reduce the binder requirement, by increasing intimacy of particle contact;
iv) simplify the hardening process, by facilitating gassing through existing standard press components;
v) allow the rapid hardening of the product before removal from the mould box, to increase press production output.

The products may be intentionally vibrated during the initial stages of compaction to:
i) improve the efficiency of grain and particle packing within the product material;
ii) reduce the applied load required to achieve the desired bulk density in the pressed product, facilitating the production of larger surface area products without a requirement for increased press loading capacity.

A process which can totally recycle 100% of its own final product and product from ay stage of the process, as its own glass feedstock.

The use of the inorganic sodium silicate binder provides a number of advantages. Firstly, relatively small proportions of this material are required, and this is a non volatile material which can thus be handled without the requirement for fume extraction and the like. During firing the sodium silicate is incorporated into the material. Therefore this binder and also the materials which have also already been fired at a higher temperature, produce very few emissions during firing. The sodium silicate once cured by carbon dioxide provides sufficient rigidity to the materials to be handled up to and during firing. The low proportions of sodium silicate mean that the materials can be fired immediately following pressing without any requirement for drying or other processing.

The materials formed can be readily pressed into required shapes to make products such as interior or exterior bricks, pavers, blocks, cladding products, or garden ware.

## Claims

1. A method of converting recycled Cathode Ray Tube glasses into a building product, by a method of making a building product material, the method including the steps of:
forming a compact of a product material, the product material including particulate recycled CRT glasses, fine particulate recycled container glass and an inorganic binder; and firing the compact; wherein the product material includes greater than 70% by weight of CRT glasses in the encapsulated type building product.

2. A method according to claim 1, **characterised in that** the product material includes greater than 97% by weight of recycled glasses.

3. A method according to claim 1 or claim 2, **characterised in that**: the recycled CRT glass is obtained from glasses used in cathode ray tubes, from such as computer monitors or televisions; the non-hazardous recycled container glass is obtained from such as bottles or jars.

4. A method according to claim 3, **characterised in that** the product material includes a mixture of one or more different types of recycled glass.

5. A method according to any of the preceding claims, **characterised in that** the recycled glass is crushed prior to formation of the compact.

6. A method according to claim 5, **characterised in that** the recycled glass is milled following crushing.

7. A method according to claims 5 or 6, **characterised in that** contaminants are removed during and/or after crushing and/or milling.

8. A method according to any of the preceding claims, **characterised in that** the recycled glass is coloured by the addition of a colouring material which is in the form of
metallic oxides, pigments, or stains.

9. A method according to any of the preceding claims, **characterised in that** the inorganic binder is cured during or following formation of the compact but prior to firing.

10. A method according to any of the preceding claims, **characterised in that** the inorganic binder comprises sodium silicate.

11. A method according to claim 10, **characterised in that** the sodium silicate is cured by carbon dioxide gas.

12. A method according to any of the preceding claims, **characterised in that** the pressing pressure to form the compact is in the range 15 to 62MPa.

13. A method according to any of the preceding claims, **characterised in that** the compact is formed by pressing the product material in a mould space.

14. A method according to claim 13 **characterised in that** the inorganic binder is cured following pressing or vibropressing of the compact, but whilst the compact is still in the mould space.

15. A method according to claim 11 or any of claims 12 to 14 when dependent on claim 11, **characterised in that** a perforated punch, other permeable item, or inlet into the mould space, is provided through which carbon dioxide is passed to enter the compact.

16. A method according to any of the preceding claims, **characterised in that** one or more surfaces of the compact are profiled.

17. A method according to claim 16 when dependent on claim 13 **characterised in that** the compact is profiled by using any of, a profiled punch, a profiled mould, or a profiled former provided in the mould space.

18. A method according to any of the preceding claims, **characterised in that** product
material rejected during formation is recycled in the method.

19. A method according to any of the preceding claims, **characterised in that** firing takes place at a peak temperature of less than 725°C.

20. A method according to any of the preceding claims, **characterised in that** firing takes place at a peak temperature dwell of between five and sixty minutes.

21. A method of making an article, the method comprising using a method according to any of claims 1 to 20 with a mould space of a required shape to form the article.

22. An article made by the method of claim 21 **characterised in that** the article comprises a building product including any of interior/exterior bricks, pavers, blocks, cladding or garden ware.

## Patentansprüche

1. Verfahren zum Umwandeln von Recycling-Kathodenstrahlröhrenglas in ein Bauprodukt durch ein Verfahren zum Herstellen eines Bauproduktmaterials, wobei das Verfahren folgende Schritte aufweist:
Bilden eines Presskörpers aus einem Produktmaterial, wobei das Produktmaterial Partikel-Recycling-CRT-Glas, Feinpartikel-Recycling-Behälterglas und ein anorganisches Bindemittel umfasst; und Brennen des Presskörpers; wobei das Produktmaterial mehr als 70 Gewichtsprozent CRT-Glas in dem Bauprodukt vom Einkapselungstyp umfasst.

2. Verfahren gemäß Anspruch 1, **dadurch gekennzeichnet, dass** das Produktmaterial mehr als 97 Gewichtsprozent Recycling-Glas umfasst.

3. Verfahren gemäß Anspruch 1 oder 2, **dadurch gekennzeichnet, dass**: das Recycling-CRT-Glas aus Glas gewonnen wird, das in Kathodenstrahlröhren verwendet wurde, z. B. von Computermonitoren oder Fernsehgeräten; das ungefährliche Recycling-Behälterglas z. B. aus Flaschen oder Gläsern gewonnen wird.

4. Verfahren gemäß Anspruch 3, **dadurch gekennzeichnet, dass** das Produktmaterial eine Mischung aus einer oder mehr unterschiedlichen Arten von Recycling-Glas umfasst.

5. Verfahren gemäß einem der vorhergehenden Ansprüche, **dadurch gekennzeichnet, dass** das Recycling-Glas vor der Bildung des Presskörpers zerstoßen wird.

6. Verfahren gemäß Anspruch 5, **dadurch gekennzeichnet, dass** das Recycling-Glas nach dem Zerstoßen zermahlen wird.

7. Verfahren gemäß Anspruch 5 oder 6, **dadurch gekennzeichnet, dass** Verunreinigungen während und/oder nach dem Zerstoßen und/oder Zermahlen entfernt werden.

8. Verfahren gemäß einem der vorhergehenden Ansprüche, **dadurch gekennzeichnet, dass** das Recycling-Glas durch die Zugabe eines Färbematerials gefärbt wird, das in Form von Metalloxiden, Pigmenten oder Färbemitteln vorliegt.

9. Verfahren gemäß einem der vorhergehenden Ansprüche, **dadurch gekennzeichnet, dass** das anorganische Bindemittel während oder nach der Bildung des Presskörpers, jedoch vor dem Brennen, gehärtet wird.

10. Verfahren gemäß einem der vorhergehenden Ansprüche, **dadurch gekennzeichnet, dass** das anorganische Bindemittel Natriumsilikat aufweist.

11. Verfahren gemäß Anspruch 10, **dadurch gekennzeichnet, dass** das Natriumsilikat durch Kohlendioxidgas gehärtet wird.

12. Verfahren gemäß einem der vorhergehenden Ansprüche, **dadurch gekennzeichnet, dass** der Pressdruck zum Bilden des Presskörpers im Bereich zwischen 15 und 62 MPa liegt.

13. Verfahren gemäß einem der vorhergehenden Ansprüche, **dadurch gekennzeichnet, dass** der Presskörper durch Pressen des Produktmaterials in einem Formraum gebildet wird.

14. Verfahren gemäß Anspruch 13, **dadurch gekennzeichnet, dass** das anorganische Bindemittel nach dem Pressen oder Vibropressen des Presskörpers gehärtet wird, jedoch noch während sich der Presskörper in dem Formraum befindet.

15. Verfahren gemäß Anspruch 11 oder einem der Ansprüche 12 bis 14 in Rückbezug auf Anspruch 11, **dadurch gekennzeichnet, dass** ein perforierter Stempel, ein anderes durchlässiges Element oder ein Einlass in den Formraum vorgesehen sind, durch die Kohlendioxid geleitet wird, um in den Presskörper einzudringen.

16. Verfahren gemäß einem der vorhergehenden Ansprüche, **dadurch gekennzeichnet, dass** eine oder mehr Oberflächen des Presskörpers mit einem Profil versehen werden.

17. Verfahren gemäß Anspruch 16 in Rückbezug auf Anspruch 13, **dadurch gekennzeichnet, dass** der Presskörper unter Verwendung eines Beliebigen von einem mit Profil versehenen Stempel, einer mit Profil versehenen Form oder einer mit Profil versehenen Formgebungsvorrichtung, die in dem Formraum vorgesehen sind, mit einem Profil versehen wird.

18. Verfahren gemäß einem der vorhergehenden Ansprüche, **dadurch gekennzeichnet, dass** Produktmaterial, das während der Bildung verworfen wird, bei dem Verfahren recycelt wird.

19. Verfahren gemäß einem der vorhergehenden Ansprüche, **dadurch gekennzeichnet, dass** das Brennen bei einer Spitzentemperatur von weniger als 725°C erfolgt.

20. Verfahren gemäß einem der vorhergehenden Ansprüche, **dadurch gekennzeichnet, dass** das Brennen mit einer Spitzentemperaturverweildauer von zwischen fünf und sechzig Minuten erfolgt.

21. Verfahren zum Herstellen eines Artikels, wobei das Verfahren das Verwenden eines Verfahrens gemäß einem der Ansprüche 1 bis 20 mit einem Formraum einer benötigten Form zur Bildung des Artikels aufweist.

22. Artikel, der mittels des Verfahrens gemäß Anspruch 21 hergestellt ist, **dadurch gekennzeichnet, dass** der Artikel ein Bauprodukt aufweist, das beliebig innere/äußere Ziegelsteine, Pflastersteine, Blöcke, Verkleidungen oder Gartengefäße umfasst.

## Revendications

1. Procédé de conversion de verres de Tubes à Rayon Cathodique (TRC) recyclés en produit de construction, grâce à un procédé de fabrication d'un matériau de construction, le procédé comprenant des étapes consistant à :
former un matériau compact, le matériau comprenant des particules de verres de TRC recyclés, de fines particules de verre de conditionnement et un liant inorganique, et brûler le matériau compact, dans lequel le matériau comprend plus de 70% en poids de verres TRC dans le produit de construction de type encapsulé.

2. Procédé selon la revendication 1, **caractérisé en ce que** le matériau comprend plus de 97% en poids de verres recyclés.

3. Procédé selon la revendication 1 ou la revendication 2, **caractérisé en ce que** le verre de TRC recyclé est obtenu à partir de verres utilisés dans les tubes à rayon cathodique, par exemple provenant d'écrans d'ordinateurs ou de télévisions, le verre de conditionnement recyclé non dangereux est obtenu à partir de bouteilles ou de bocaux par exemple.

4. Procédé selon la revendication 3, **caractérisé en ce que** le matériau comprend un mélange d'un ou plusieurs types différents de verre recyclé.

5. Procédé selon l'une quelconque des revendications précédentes, **caractérisé en ce que** le verre recyclé est pilé avant la formation du matériau compact.

6. Procédé selon la revendication 5, **caractérisé en ce que** le verre recyclé est moulu après avoir été pilé.

7. Procédé selon les revendications 5 ou 6, **caractérisé en ce que** des contaminants sont retirés lorsque le verre est pilé et/ou moulu et/ou après que le verre est pilé et/ou moulu.

8. Procédé selon l'une quelconque des revendications précédentes, **caractérisé en ce que** le verre recyclé est coloré par l'ajout d'un matériau de coloration qui se présente sous la forme d'oxydes, de pigments ou de tâches métalliques.

9. Procédé selon l'une quelconque des revendications précédentes, **caractérisé en ce que** le liant inorganique est séché pendant ou après la formation du matériau compact mais avant qu'il soit brûlé.

10. Procédé selon l'une quelconque des revendications précédentes, **caractérisé en ce que** le liant inorganique comprend du silicate de sodium.

11. Procédé selon la revendication 10, **caractérisé en ce que** le silicate de sodium est séché grâce à du gaz de dioxyde de carbone.

12. Procédé selon l'une quelconque des revendications précédentes, **caractérisé en ce que** la pression de compression permettant de former le matériau compact est comprise entre 15 et 62 MPa.

13. Procédé selon l'une quelconque des revendications précédentes, **caractérisé en ce que** le matériau compact est formé en pressant le matériau dans un moule.

14. Procédé selon la revendication 13, **caractérisé en ce que** le liant inorganique est séché après une étape de pressage ou de vibropressage du matériau compact, alors que le matériau compact est toujours dans le moule.

15. Procédé selon la revendication 11 ou l'une quelconque des revendications 12 à 14 lorsqu'elles dépendent de la revendication 11, **caractérisé en ce que** le moule présente un orifice pratiqué à l'aide d'un poinçon, un autre objet perméable, ou un point d'entrée par lequel le dioxyde de carbone passe à l'intérieur du matériau compact.

16. Procédé selon l'une quelconque des revendications précédentes, **caractérisé en ce que** l'une ou plusieurs surfaces du matériau compact sont profilées.

17. Procédé selon la revendication 16 lorsqu'elle dépend de la revendication 13, **caractérisé en ce que** le matériau compact est profilé en utilisant l'un quelconque des moyens suivants : un poinçon profilé, un moule profilé, ou une forme profilée, prévu dans le moule.

18. Procédé selon l'une quelconque des revendications précédentes, **caractérisé en ce que** le matériau rejeté lors de la formation est recyclé selon le procédé.

19. Procédé selon l'une quelconque des revendications précédentes, **caractérisé en ce que** l'étape consistant à brûler le matériau est effectuée à une température crête inférieure à 725°C.

20. Procédé selon l'une quelconque des revendications précédentes, **caractérisé en ce que** l'étape consistant à brûler le matériau est effectuée à une température crête d'une durée comprise entre cinq et soixante minutes.

21. Procédé de fabrication d'un article, le procédé comprenant l'utilisation d'un procédé selon l'une quelconque des revendications 1 à 20, à l'aide d'un moule d'une forme désirée pour la formation de l'article.

22. Article fabriqué selon le procédé de la revendication 21, **caractérisé en ce que** l'article comprend un matériau de construction comprenant l'un quelconque des éléments suivants : des briques d'intérieur ou d'extérieur, des carreleurs, des blocs, des parements ou des articles de jardin.
